# FASCICULE DE BREVET EUROPEEN

(11) **EP 3 011 278 B1**
(45) Date de publication et mention de la délivrance du brevet: **21.11.2018**
(21) Numéro de dépôt: 14731628.5
(22) Date de dépôt: 19.06.2014
(51) Int. Cl.: G01F 1/712, G01F 1/66, G01F 1/00

(54) **MÉTHODE DE CONVERSION D'UNE MESURE DE VITESSE LOCALE D'UN FLUIDE EN UNE VITESSE MOYENNE DANS UN CANAL OU UN CONDUIT**
VERFAHREN ZUR UMWANDLUNG EINER ÖRTLICHEN MESSUNG VON FLUIDSGESCHWINDIGKEIT AUF EINE DURCHSCHNITTLICHE HAUPTGESCHWINDIGKEIT IN EINEM KANAL ODER IN EINER LEITUNGSRÖHRE
METHOD FOR CONVERTING A LOCAL MEASUREMENT OF FLUID VELOCITY TO AN AVERAGE BULK VELOCITY IN A CHANNEL OR A CONDUIT

(30) Priorité: 21.06.2013 US 201361837994 P
(43) Date de publication de la demande: 27.04.2016
(73) Titulaire: Flow-Tronic S.A., 4840 Welkenraedt (BE)
(72) Inventeur: SEVAR, Jean-Marie, B-4840 Welkenraedt (BE)
(74) Mandataire: Pronovem
(86) Numéro de dépôt international: PCT/EP2014/062921
(87) Numéro de publication internationale: WO 2014/202709

(56) Documents cités:
- FR-A1- 2 826 455
- US-A- 5 315 880
- "SYSTEM Q-Eye Radar. Pulse-Doppler FFT Technology. Non Contact Open Channel Flow Measurement System.", HydroVision Acoustic Flow Meter, 30 juin 2010 (2010-06-30), pages 1-4, XP055136969, Extrait de l'Internet: URL:http://www.globalagua.pt/cbx/q-eyerada r_e_a4.pdf [extrait le 2014-08-27]
- FlowTronicSA: "Raven-Eye for sewer monitoring", , 20 juin 2013 (2013-06-20), XP054975498, Extrait de l'Internet: URL:https://www.youtube.com/watch?v=iNtyAo Yjk9w [extrait le 2014-08-28]
- "TECHNICAL SPECIFICATIONS RAVEN-EYE New Generation Open Channel Non-Contact Radar Velocity Sensor", , 20 juin 2013 (2013-06-20), pages 1-2, XP055137155, Extrait de l'Internet: URL:http://www.flow-tronic.com/en/download s/technical-specifications/technical-speci fications-raven-eye-en/view [extrait le 2014-08-28]
- Stéphane Fischer: "Développement d'une instrumentation ultrasonore pour la mesure des vitesses des liquides au-delà de la limite de Nyquist par une approche spectrale", Thèse, 14 février 2006 (2006-02-14), pages 1-213, XP055136903, Extrait de l'Internet: URL:http://tel.archives-ouvertes.fr/docs/0 0/05/88/13/PDF/these_final.pdf [extrait le 2014-08-27]
- Ceyda Polatel: "LARGE-SCALE ROUGHNESS EFFECT ON FREE-SURFACE AND BULK FLOW CHARACTERISTICS IN OPEN-CHANNEL FLOWS", Phd Thesis, 31 juillet 2006 (2006-07-31), pages 1-234, XP055136944, Extrait de l'Internet: URL:http://www.polatel.com/polatelDisserta tion.pdf [extrait le 2014-08-27]

## Description

### Objet de l'invention

La présente invention se rapporte à une méthode permettant de déterminer la vitesse moyenne d'un fluide dans un canal ouvert ou dans un conduit partiellement rempli. Plus précisément, elle se rapporte à une méthode de détermination de la vitesse moyenne d'un fluide sur base d'une mesure locale de la vitesse en surface du fluide.

Elle se rapporte en outre au dispositif destiné à mettre en oeuvre cette méthode.

### Arrière-plan technologique et état de la technique

Au sein d'un conduit parcouru par un fluide, il existe un gradient de vitesse aussi bien dans la direction horizontale que dans la direction verticale de la section droite mouillée, la vitesse étant théoriquement proche de zéro au niveau des parois du conduit. Il est dès lors nécessaire de déterminer une vitesse moyenne du fluide. Cependant, les débitmètres effectuent généralement une mesure ponctuelle ou partielle de la vitesse à la surface du liquide ou dans la section droite mouillée. Ainsi, les technologies basées sur les mesures de vitesse telles que les mesures par hélices, turbines, force, Vortex, thermique, ultrasons à temps de transit, ultrasons à effet Doppler, ultrasons à corrélation croisée et, plus particulièrement, les mesures de vitesse de surface en canaux ouverts par micro-ondes radar, par ondes acoustiques, par optique et laser rencontrent toutes le même problème de conversion d'une mesure locale précise de la vitesse en une vitesse moyenne correcte dans la section mouillée, cette vitesse moyenne étant ensuite multipliée par la surface de la section mouillée pour obtenir le débit.

La façon la plus courante de résoudre ce problème de conversion est d'étalonner le débitmètre sur un banc d'étalonnage. Cette technique d'étalonnage est très souvent utilisée pour les conduites en charge. Pour les canaux ouverts, il est difficile voire impossible de reproduire tous les éléments du site de mesure en laboratoire hydraulique ou sur un banc d'étalonnage. Pour affiner la conversion de la mesure de vitesse locale voire ponctuelle en mesure de vitesse moyenne de la section mouillée, plusieurs techniques de calibration sont utilisées. La plus courante est le relevé d'une matrice de points de mesure de vitesse à l'aide de moulinets, sondes électromagnétiques de vitesse, sonde Doppler, sonde laser ou tout autre dispositif de mesure de vitesse ponctuelle et de convertir ce relevé de mesures de vitesses en vitesse moyenne pour le niveau d'eau et les conditions hydrauliques rencontrées lors du relevé. La calibration peut également être réalisée par des mesures de débit de référence. Ces calibrations doivent être répétées pour différents niveaux d'eau pouvant survenir dans le canal ouvert ou conduit partiellement rempli.

Les conditions hydrauliques sont généralement définies et caractérisées par le seul niveau d'eau mais d'autres paramètres (température, pH, conductibilité, turbidité, ...) peuvent être également pris en considération pour définir des conditions hydrauliques d'écoulement particulières. Dans la plupart des cas, la mesure de niveau constitue l'élément pris en compte pour caractériser les conditions hydrauliques d'écoulement. Dans certains cas particuliers, lorsque le niveau varie peu, la mesure ponctuelle ou locale de vitesse peut être prise en compte pour caractériser les conditions hydrauliques d'écoulement. Dans des situations plus particulières où il y a un blocage de l'écoulement en aval, une combinaison de la mesure de vitesse ponctuelle ou locale et du niveau permettent de déterminer les conditions hydrauliques. Une fois les conditions hydrauliques définies par une mesure ou un ensemble de mesures, un nombre de facteurs de corrections correspondant à chaque condition hydraulique pourront être relevés par calibration sur le site de mesure, et convertis en une table de conversion (généralement une table de conversion dépendante du niveau avec interpolation linéaire entre les différents points de mesure) ou un modèle de correction.

Outre la difficulté d'effectuer ce relevé avec précision, un énorme désavantage de cette méthode est qu'elle nécessite beaucoup de temps pour effectuer les relevés dans les différentes conditions hydrauliques d'écoulement. On notera d'ailleurs qu'il est parfois impossible pour des raisons techniques ou de sécurité des opérateurs d'effectuer ces relevés.

Afin d'éviter ces inconvénients de nouvelles technologies ont été brevetées ou appliquées. Le brevet US 5,315,880 décrit une méthode consistant à déterminer un débit volumique en multipliant la vitesse de surface par la section d'écoulement.

Le brevet US 7,672,797 B2 décrit une méthode consistant à déterminer la vitesse maximum sur un profil de vitesse vertical et à appliquer un facteur de multiplication sur cette vitesse maximale pour calculer la vitesse moyenne.

Le brevet US 5,811,688 décrit une méthode basée sur une mesure de vitesse locale en surface du fluide consistant à appliquer des facteurs de multiplication sur la vitesse de surface mesurée, les facteurs de multiplication étant fonction du niveau de fluide dans la conduite.

D'autres technologies basées sur des modèles mathématiques peuvent également être utilisées. L'un des plus connus est le modèle se basant sur les éléments finis de Dr. Kölling tel que décrit dans le brevet EP 0 681 683 B1 et dans le document SYSTEM Q-Eye Radar d'HydroVision *(http:*//*www.globalagua.pt*/*cbx*/*q-eyerayadar_e_a4.pdf).* Dans ces documents, il simule un ensemble de répartitions de vitesses d'écoulement dans un canal ayant un profil connu et, ce, pour plusieurs niveaux de liquide dans le canal. Sur base d'une mesure du niveau de liquide et d'une mesure de vitesse, il sélectionne ensuite la répartition de vitesses simulées qui est appropriée pour le niveau de liquide mesuré.

L'inconvénient majeur des modèles mathématiques est qu'ils doivent être alimentés par des données caractérisant le canal ou le conduit. Ces données incluent la pente et la rugosité qui sont des éléments difficiles à déterminer avec précision et qui peuvent évoluer dans le temps pour ce qui est de la rugosité.

### Buts de l'invention

La présente invention vise à s'affranchir des inconvénients de l'état de la technique.

Plus précisément, la présente invention vise à déterminer par mesure la vitesse moyenne du fluide dans la section mouillée sans recourir à des modèles de simulation ou des facteurs de correction nécessitant des calibrations fastidieuses.

### Principaux éléments caractéristiques de l'invention

La présente invention se rapporte à une méthode de calcul de la vitesse moyenne d'un fluide circulant dans un canal ouvert ou un conduit partiellement rempli, ledit fluide ayant une surface libre de largeur L1 s'étendant entre les parois du canal ou du conduit, ladite méthode comprenant les étapes suivantes :
- mesures locales de vitesse à la surface du fluide sur une zone de largeur L2, l'ensemble des mesures locales générant un signal sous forme d'un spectre de données discrètes exprimées dans un domaine temporel ;
- conversion du spectre de données discrètes exprimées dans le domaine temporel en un spectre de données exprimées dans un domaine fréquentiel via une transformée de Fourier ;
- adaptation d'une courbe gaussienne sur le spectre de données discrètes exprimées dans le domaine fréquentiel et calcul des paramètres de la courbe gaussienne, à savoir la moyenne µ et la déviation standard σ de la courbe gaussienne ; la fréquence à la moyenne µ permettant de calculer la vitesse moyenne de surface sur la zone de largeur L2 et la déviation standard σ permettant de calculer la distribution de vitesses sur cette même zone de largeur L2 ;
- calcul du rapport L2/L1 entre la largeur L2 de la zone impactée lors des mesures et la largeur L1 de la surface libre du fluide, ladite largeur L1 étant calculée sur base d'une mesure du niveau du fluide dans le canal ou le conduit (1);
- détermination de la vitesse moyenne du fluide au sein du canal ouvert ou du conduit partiellement rempli sur base des paramètres de la courbe gaussienne et en fonction du rapport L2/L1:
   - lorsque L1 égal L2, la vitesse moyenne du fluide au sein du canal ouvert ou du conduit partiellement rempli est égale à la vitesse moyenne de surface du fluide sur la zone de largeur L2;
   - lorsque le rapport L2/L1 est supérieur ou égal à 3/5 et, de préférence à 2/3, et inférieur à 1, la vitesse moyenne du fluide au sein du canal ouvert ou du conduit partiellement rempli est égale à la vitesse moyenne de surface du fluide sur la zone de largeur L2 multipliée par un facteur de correction qui est fonction de la déviation standard de la courbe gaussienne;
   - lorsque le rapport L2/L1 est inférieur à 3/5 et, de préférence à 2/3, la vitesse moyenne du fluide au sein du canal ouvert ou du conduit partiellement rempli est calculée sur base de la distribution de vitesses mesurées sur la zone de la largeur L2 extrapolées pour les vitesses manquantes sur base d'enregistrements préalables de la distribution de vitesses lorsque ledit rapport était supérieur ou égal à 3/5 et, de préférence à 2/3.

Selon des modes particuliers de l'invention, la méthode comporte au moins une ou une combinaison appropriée des caractéristiques suivantes :
- plusieurs séquences de mesures locales de vitesse sont effectuées, lesdites séquences étant sommées après la transformée de Fourier résultant en une seule séquence sur laquelle la courbe gaussienne est adaptée ;
- l'étape d'adaptation d'une courbe gaussienne s'effectue sur un groupe de données discrètes le plus énergétique dans une gamme de vitesses prédéterminée ;
- ledit groupe de données discrètes le plus énergétique est sélectionné comme suit : le pic le plus énergétique dans la gamme de vitesses prédéterminée est recherché, une fraction donnée de l'énergie du pic est calculée, les groupes de mesures contigus dont l'énergie dépasse cette valeur calculée sont recherchés, les surfaces que représente chaque groupe sont calculées, le groupe ayant la surface la plus importante est retenu et une fonction gaussienne représentant une surface identique est calculée et superposée audit groupe sélectionné, de préférence ladite fraction est comprise entre 1/3 et 1/2 ;
- le facteur de correction est supérieur à 0.9 et, plus précisément, compris entre 0.94 et 0.98 ;
- elle comprend une étape préalable de validation des mesures en fonction de paramètres prédéfinis avant l'étape de détermination de la vitesse moyenne au sein du canal ouvert ou du conduit partiellement rempli ;
- les paramètres prédéfinis sont une valeur en dB du gain d'un amplificateur automatique, le nombre de données se trouvant sous l'enveloppe de la courbe gaussienne et/ou l'amplitude maximum de la courbe gaussienne par rapport à l'amplitude de toutes les mesures incluant le bruit de fond ;
- lorsque la valeur en dB du gain est supérieure à une valeur donnée, il y a une étape de focalisation sur les plus faibles vitesses du spectre et ensuite à nouveau une étape d'adaptation d'une courbe gaussienne sur le spectre de données discrètes retenus après focalisation sur les plus faibles vitesses et une étape de calcul des paramètres de la courbe gaussienne ;
- la valeur donnée est de 80 dB pour une plage de mesure comprise entre - 0.6m/s et + 0.6m/s ;
- la valeur donnée est de 84 dB pour une plage de mesure comprise entre - 0.3m/s et + 0.3m/s ;
- les paramètres prédéfinis peuvent être adaptés par un utilisateur en remplissant un questionnaire ;
- la transformée de Fourier est une transformée de Fourier rapide.

La présente invention se rapporte également à un dispositif pour calculer la vitesse moyenne d'un fluide circulant dans un canal ouvert ou un conduit partiellement rempli, ledit fluide ayant une surface libre de largeur L1 s'étendant entre les parois du canal ou du conduit, ledit dispositif comprenant :
- un capteur pour effectuer des mesures de vitesse en surface du fluide sur une zone de largeur L2 inférieure ou égale à la largeur L1; ledit capteur fournissant un signal sous forme d'un spectre de données discrètes exprimées dans un domaine temporel;
- un capteur de niveau du fluide dans le canal ou le conduit afin de calculer la largeur L1;
- un processeur et des moyens de stockage,
   lesdits moyens de stockage comprennent un programme d'ordinateur comprenant un code logiciel adapté pour mettre en oeuvre la méthode selon l'invention.

Selon un mode particulier de l'invention, le dispositif comprend une interface utilisateur qui permet de modifier sur site des conditions de validation des mesures effectuées par le capteur de vitesse.

La présente invention se rapporte aussi à un programme d'ordinateur comprenant un code logiciel adapté pour mettre en oeuvre la méthode décrite ci-dessus et au moyen d'enregistrement des données lisibles par ordinateur comprenant ledit programme.

### Brève description des figures

La figure 1 représente schématiquement la zone de la surface du liquide impactée par la source d'énergie lors de la mesure de vitesse. L1 correspond à la largeur de la surface libre du fluide s'écoulant dans le canal ouvert ou dans le conduit partiellement rempli et L2 correspond à la largeur de la zone impactée par la source d'énergie. La largeur est définie comme une dimension de direction perpendiculaire à la direction d'écoulement du fluide.

La figure 2 représente le spectre de données discrètes obtenues après mesure et exprimées en amplitude du signal (énergie) en fonction de la fréquence après une transformée de Fourier rapide.

La figure 3 représente la courbe gaussienne adaptée sur le spectre de la figure 2.

La figure 4 illustre l'effet du niveau d'eau dans la conduite sur la taille de la zone impactée par la source d'énergie du capteur.

La figure 5 représente schématiquement un écoulement de liquide dans une conduite circulaire partiellement remplie avec les différentes lignes de vitesse telles qu'elles sont rencontrées dans la section droite avec leur répercussion à la surface du liquide, et la zone de mesure illuminée par les micro-ondes.

### Légende

(1) Conduite ou canal
(2) Capteur
   L1 : largeur de la surface libre du fluide dans la conduite ou le canal
   L2 : largeur de la surface du fluide impactée par la source d'énergie

### Description générale de l'invention

La méthode selon l'invention se base sur des mesures de vitesse de surface ou sous-surface effectuées par toute technologie capable d'effectuer une telle mesure. De préférence, les mesures sont effectuées à l'aide de sondes ou transducteurs non-intrusifs, c.à.d. sans contact avec le liquide à mesurer, telles que les mesures optiques, laser, acoustiques ou radar (micro-ondes).

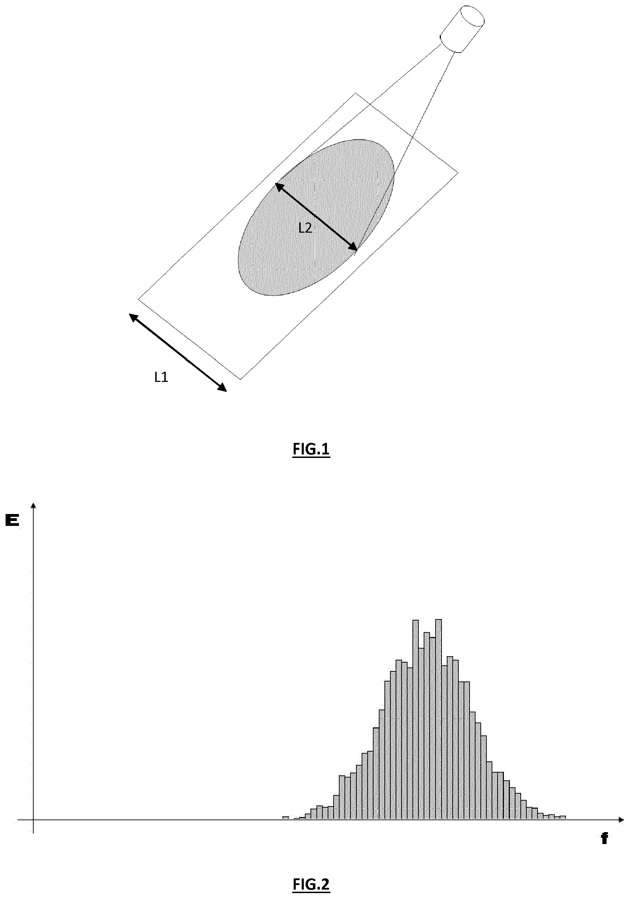

Ces technologies non-intrusives de mesures de vitesse permettent par l'utilisation adéquate d'antenne à cornet (horn antenna) pour les radars à micro-ondes, de lentilles optiques pour les systèmes optiques et laser ou de guides d'ondes sonores pour les systèmes acoustiques, de focaliser l'énergie du signal émis de manière précise. Cela a pour avantage que les dimensions de la zone impactée (voir zone grise dans la Fig.1) et, en particulier, la largeur L2 de la zone impactée, peuvent être calculées précisément et comparées à la largeur L1 de la surface libre du liquide dans le canal ou conduit.

Pour les systèmes radar à micro-ondes, un nombre précis d'impulsions est envoyé du haut vers le bas avec un angle d'élévation connu vers la surface du liquide à mesurer. Les signaux réfléchis par la surface du liquide en mouvement présentent un décalage de la fréquence dû à l'effet Doppler qui est directement proportionnel à la vitesse de déplacement des particules de la surface du liquide générant les signaux réfléchis. Chaque impulsion réfléchie va générer une donnée de mesure. Le nombre d'impulsions réfléchies dans une séquence de mesures générera une mosaïque complexe de données discrètes. Ces séquences sont répétées régulièrement durant des périodes d'échantillonnages. Ceci constitue un ensemble de données discrètes exprimées en amplitude en fonction du temps.

Selon l'invention, le spectre de données de chaque séquence exprimées dans le domaine temporel est transformé en un domaine fréquentiel via une transformée de Fourier discrète (TFD) et, de préférence, une transformée de Fourier rapide (FFT) afin de réduire le temps de calcul. Le traitement numérique du spectre de données discrètes du domaine temporel par FFT dans le domaine fréquentiel permet ainsi de réaliser les filtrages nécessaires pour faire ressortir les différentes mesures de vitesses recherchées (spectre de vitesse).

Un graphique type d'une séquence de mesures après transformée de Fourier rapide FFT est montré à la figure 2.

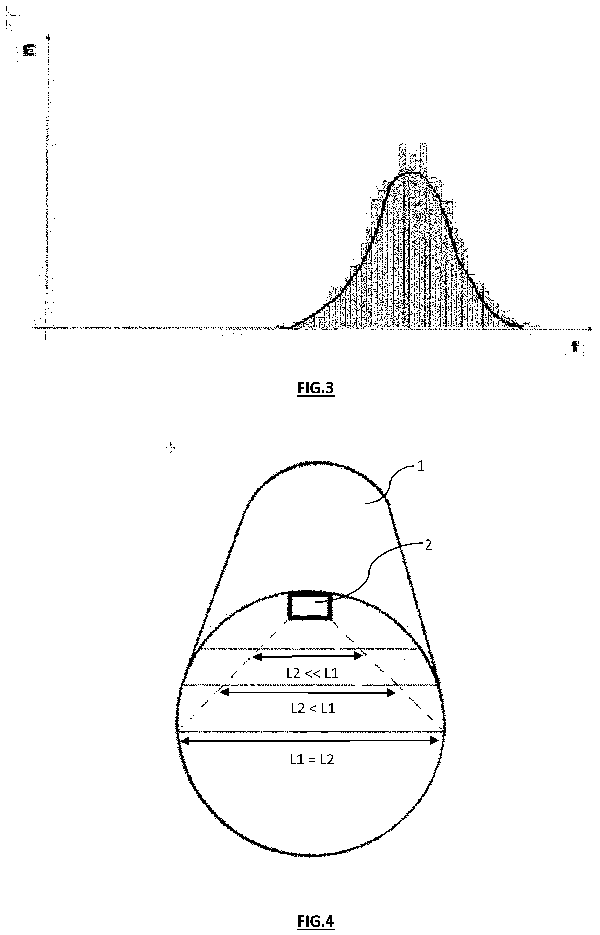

Une caractéristique essentielle de la méthode selon l'invention consiste à effectuer une transformation mathématique complémentaire sur le spectre de données transformées plutôt que d'utiliser les données brutes issues de la transformée de Fourier rapide FFT. Les essais effectués par le demandeur ont montré que les graphiques de distribution d'énergie présente toujours la forme caractéristique en cloche propre à la fonction gaussienne. La transformation mathématique complémentaire consiste donc à adapter une fonction gaussienne à la distribution d'énergie de chaque séquence de données discrètes (best fitted Gaussian) tel que montré à la figure 3.

Si les mesures effectuées sont considérées valides pour des raisons explicitées plus loin, la fréquence Doppler à l'amplitude maximum, c.à.d. à la moyenne µ de la courbe gaussienne permet de calculer, via des relations connues, la vitesse moyenne de surface pour la zone impactée et la déviation standard σ de la courbe gaussienne permet de déterminer l'étendue du spectre de vitesses pour cette même zone impactée.

Le processeur calcule ensuite si la totalité de la largeur L1 de la surface du fluide est illuminée par la source d'énergie du capteur ou si seule une partie l'est et, dans ce cas, détermine la proportion illuminée. Si la totalité, voire une grande proportion de la surface libre est illuminée c.à.d. si plus de 3/5 et, de préférence, plus de 2/3 de la zone de la largeur L1 est illuminée, il peut être conclu que la déviation standard est non seulement représentative de la distribution horizontale de vitesses de la section mouillée mais également de la distribution verticale de vitesses dans cette même section mouillée. En effet, il est connu de l'art antérieur (voir Fig.2 du brevet EP 0 681 683 B1 de Kölling) que la distribution verticale de vitesses est une image de la distribution horizontale de vitesses pour des profils de vitesse totalement développés, c.à.d. en l'absence de perturbations en amont et en aval de la zone de mesure. Dès lors, la vitesse moyenne calculée en surface sur base de la gaussienne peut être considérée égale ou sensiblement égale à la vitesse moyenne du fluide au sein de la section mouillée.

Si la largeur L2 de la zone illuminée est de taille inférieure à 3/5 ou, de préférence, à 2/3 de la largeur L1 de la surface libre du liquide, il est alors nécessaire de recourir à des enregistrements de mesures préalables de la déviation standard où une zone plus large était illuminée afin d'effectuer des extrapolations pour les vitesses manquantes dans les zones non impactées.

La vitesse moyenne ne peut être calculée sur base de la courbe gaussienne que si les mesures sont validées. La validation a pour objet d'éliminer des mesures qui ne seraient pas correctes.

Il y a deux cas de figures envisagés qui seront plus largement expliqués dans la description détaillée de l'invention.

Dans un premier cas de figure, l'énergie du signal reçu est grande par rapport au bruit de fond, c.à.d. que la valeur en dB du contrôle automatique du gain de l'amplificateur est inférieure à une valeur prédéterminée. Dans ce cas, le processeur vérifie que le nombre de mesures de vitesse discrètes reprisent à l'intérieur de la courbe gaussienne et/ou que l'amplitude de la courbe gaussienne par rapport à toutes les mesures se trouvant dans la totalité du spectre incluant le bruit de fond se trouvent dans une gamme de valeurs qui ont été prédéterminées lors de l'initialisation du transducteur. Si oui, les mesures sont validées. Sinon, elles sont rejetées.

Dans un second cas de figure, l'énergie du signal reçu est faible par rapport au bruit du fond, c.à.d. que la valeur en dB du contrôle automatique du gain est supérieure à une (ou plusieurs) valeur(s) prédéterminées. Cela peut être, par exemple, le cas lorsque l'écoulement au sein du conduit est lent. Dans ce cas de figure, le processeur pourrait sélectionner des vitesses parasites plus élevées car plus énergisantes et donc fournir une valeur de vitesse erronée. Pour remédier à ce problème, une étape de focalisation sur les plus faibles fréquences du spectre, c.à.d. sur les plus faibles vitesses, est prévue comme expliqué plus en détail ci-dessous.

### Description détaillée de l'invention

La méthode selon l'invention utilise les données suivantes :
- les données discrètes issues des mesures du capteur à partir desquelles on calcule la transformée de Fourrier rapide (FFT) et la fonction gaussienne (best fit gaussien) à superposer au spectre exprimé dans le domaine fréquentiel, cette transformation permettant d'obtenir une mesure beaucoup plus stable dans le temps ;
- les données issues de la courbe gaussienne, à savoir la moyenne µ et la déviation standard σ, qui permettront de calculer la vitesse moyenne du fluide et l'étendue du spectre des vitesses ;
- l'énergie à l'amplitude maximum de la courbe gaussienne et l'énergie moyenne du signal transformé, c.à.d. de l'ensemble de toutes les mesures transformées, incluant le bruit de fond, afin de déterminer le rapport signal/bruit ou SNR Signal to Noise Ratio ;
- la valeur du gain des amplificateurs automatiques ;
- le nombre de mesures de vitesses se trouvant sous l'enveloppe de la courbe gaussienne ou VSN Velocity Spectrum Number ;
- les dimensions exactes de la zone illuminée. En connaissant l'angle d'ouverture du faisceau, l'angle d'élévation et la distance du capteur par rapport à la surface cible, il est possible de calculer avec précision la largeur L2 de la partie illuminée par le faisceau de micro-ondes. Cette information sera utilisée pour déterminer le pourcentage de la largeur L1 de la surface libre du liquide illuminée, c.à.d. le ratio entre la largeur L2 de la partie illuminée et la largeur L1 de la surface libre du fluide ;
- les dimensions et la forme du canal ou conduit ainsi que le niveau du liquide dans le canal ou conduit pour calculer la distance à laquelle se trouve le capteur par rapport au liquide ce qui permet de calculer la largeur L1 de la surface libre mentionnée ci-dessus.

Dans une première étape, le capteur effectue une série de mesures locales à la surface du fluide et un ensemble de données discrètes exprimées en amplitude en fonction du temps est obtenu. Par exemple, 32 séquences de 1024 impulsions sont envoyées vers la surface du liquide lors d'une période d'échantillonnage.

Dans une seconde étape, le processeur effectue la transformée de Fourier rapide (FFT) sur les données discrètes de la première étape et, ce, pour chaque séquence de données discrètes, soit 32 FFT.

Dans une troisième étape, les différentes séquences de données discrètes sont sommées afin d'obtenir une seule séquence de données discrètes de grandes amplitudes. Cela permet de faire ressortir les signaux de mesure par rapport au bruit de fond. En effet, le bruit de fond est composé de signaux aléatoires qui se réduisent lors des additions alors que les séquences de mesures sont répétitives, c.à.d. similaires voire identiques en fréquence, et dès lors vont s'accroître lors des additions.

Dans une quatrième étape, l'adaptation de la courbe gaussienne sur la séquence de données discrètes obtenues après l'addition précitée est effectuée et les paramètres suivants sont calculés : la fréquence pour la moyenne µ de la courbe gaussienne et la déviation standard σ de la courbe gaussienne. L'adaptation de la fonction gaussienne à la distribution de fréquences permet d'obtenir des résultats remarquables tant en précision absolue de la mesure qu'en stabilité temporelle de la vitesse de surface. Un autre avantage de l'utilisation de la fonction gaussienne est l'obtention de la valeur de la déviation standard σ qui donne une mesure directe de l'étendue du spectre de vitesses mesurées. De préférence, l'adaptation de la courbe gaussienne s'effectue sur le groupe de données discrètes le plus énergétique dans la plage de mesure définie lors de la mise en service ou par l'utilisateur sur site. Ainsi, si une plage de mesures entre - 1m/s et + 6m/s a été définie, le processeur recherche le pic le plus énergétique dans cette plage. Ensuite, le processeur calcule une fraction donnée de l'énergie maximale, par exemple 1/3 ou 1/2, et recherche les groupes de mesures contigus dont l'énergie dépasse cette valeur calculée. Il calcule ensuite les surfaces que représente chaque groupe. Le groupe ayant la surface la plus importante est retenu et une fonction gaussienne représentant une surface identique est calculée et superposée au groupe de mesures sélectionné. On verra à la cinquième étape, qu'il est possible sur site de rechercher ce groupes de mesures dans une gamme de vitesses plus restreinte à basse vitesse si, par exemple, le signal reçu est faible.

Dans une cinquième étape, le processus de validation des mesures est entrepris et consiste à comparer certains paramètres à des valeurs prédéfinies. Si la valeur en dB du contrôle automatique du gain (AGC) est inférieure à une valeur prédéterminée, ce qui veut dire que l'énergie du signal reçu est grande par rapport au bruit de fond, et/ou si l'option focalisation sur écoulements lents n'a pas été cochée dans l'interface utilisateur, le processeur peut directement passer à l'étape de l'analyse qualité des mesures faites en vérifiant que les paramètres de qualité de la courbe gaussienne se trouvent dans les limites prédéfinies. Les paramètres à comparer à des valeurs limites sont le nombre de mesures reprises sous l'enveloppe de la courbe gaussienne « VSN Velocity Spectrum Number » et/ou l'amplitude de la courbe gaussienne représentant l'énergie du signal reçu par rapport à l'énergie moyenne du signal transformé, c.à.d. de l'ensemble de toutes les mesures transformées « SNR Signal to noise Ratio ». Les valeurs limites sont des valeurs transférées au transducteur au moment de l'initialisation ou « set-up ». Elles sont fixées par défaut et couvrent environ 70% des applications. Comme expliqué plus loin, les valeurs limites peuvent à tout moment être adaptées en fonction des conditions hydrauliques (rugosité, pente des parois, blocage en aval,...) afin de prendre en compte des conditions particulières d'un site de mesure. A cet effet, un questionnaire simple a été mis au point de manière à faciliter la tâche d'un utilisateur moins expérimenté ou n'ayant pas ou peu de notions en hydraulique. La modification des valeurs par défaut des paramètres de qualité permet de couvrir 90% à 95% des applications au lieu des +/- 70% avec les paramètres par défaut, et, ce, sans avoir à comprendre les valeurs abstraites des paramètres de qualité afin de les modifier correctement.

Des exemples de questions simples posées à l'utilisateur sont :
- La pente est-elle :
   ∘ douce < = 0.2%
   ∘ normale 0.2% < P <= 0.5%
   ∘ forte > 0.5%
- La rugosité du conduit est-elle :
   ∘ douce (conduit PVC, PE, asbeste ciment, ...)
   ∘ normale (conduit béton, ...)
   ∘ forte (canal maçonné, ...)
- Eau stagnante possible :
   ∘ oui
   ∘ non
- Variation rapide de l'écoulement due à la présence de pompes de relevage en amont proche :
   ∘ oui
   ∘ non
- Focalisation sur écoulements lents :
   ∘ oui
   ∘ non
- Influence hydraulique avale (blocage, influence marée, ...):
   ∘ oui
   ∘ non

En fonction des réponses de l'utilisateur, les valeurs limites des paramètres de qualité seront automatiquement adaptées.

Si les paramètres de qualité sont dans les limites ainsi prédéterminées ou modifiées ultérieurement suite aux réponses au questionnaire, la mesure est validée et acceptée. Si les paramètres de qualité sont en dehors des limites ainsi prédéterminées, la mesure est rejetée et la dernière bonne mesure est maintenue. Ce maintien se fait un nombre de fois prédéterminé « NOH Number Of Holds » avant de faire basculer la mesure à zéro ou à une autre valeur prédéterminée lors de la mise en service, ou à une valeur obtenue sur base d'un tableau niveau/vitesse sur base théorique ou mieux sur base de mesures antérieures sur le même site de mesure si l'une des options eau stagnante possible ou influence hydraulique avale n'a pas été cochée dans le questionnaire lors de la mise en service. L'alimentation du tableau pouvant se faire automatiquement par le processeur au fur et à mesure des vitesses validées mesurées à différents niveaux ou manuellement lors de la mise en service.

Si la valeur en dB du contrôle automatique du gain (AGC) est supérieure à une ou plusieurs valeur(s) prédéterminée(s), ce qui veut dire que l'énergie du signal reçu est faible par rapport au bruit de fond, et que la focalisation sur écoulements lents a été cochée lors de la mise en service ou dans l'interface utilisateur, le processeur va répéter son analyse des signaux reçus tout en focalisant sa recherche dans une plage de mesures de faibles vitesses, c.à.d. de faibles fréquences du spectre. Par exemple, il peut focaliser sa recherche dans une plage de mesures de +/- 0.6 m/s voire +/- 0.3 m/s en fonction du niveau énergétique du signal, les valeurs limites de focalisation pouvant être modifiées lors de la mise en service, ainsi que la ou les valeur(s) limites du gain exprimé en dB, si nécessaire.

Les causes d'un rapport signal/bruit de fond faible sont dans le cas d'une mesure par radar micro-ondes presque exclusivement liées aux vitesses d'écoulements faibles et surfaces lisses associées. Le processeur aura tendance à sélectionner des vitesses parasites plus élevées car plus énergisantes. Pour d'autres techniques de mesure acoustique, optique ou laser, la distance du transducteur à la surface à mesurer peut avoir une forte influence sur le rapport signal/bruit de fond. Ces signaux parasites de forte amplitude peuvent représenter une fréquence unique ou un spectre de fréquences ressemblant à un spectre de vitesses. Le parasite à fréquence unique sera éliminé car il sera en dehors des valeurs limites des paramètres de qualité mais il masquera la valeur réelle de faible amplitude. Le spectre de fréquences représentera quant à lui une mesure de vitesse plausible mais fausse. C'est la raison pour laquelle selon l'invention il est possible d'effectuer une focalisation sur les vitesses faibles. Cette focalisation sur les vitesses faibles s'effectuera quand le contrôle automatique du gain dépasse une valeur prédéterminée, par exemple, de 80 dB pour une plage de mesure, par exemple, de +/- 0.6 m/s, voire, par exemple, 84 dB pour une plage de mesure, par exemple, de +/- 0.3 m/s. Ces valeurs limites pouvant être modifiées lors de la mise en service si nécessaire. Après focalisation sur les vitesses faibles, le processeur procédera comme susmentionné aux étapes 4 et 5.

Dans une sixième étape, le processeur calcule si la totalité de la surface est illuminée par le signal émis ou si seule une partie l'est et, dans ce dernier cas, détermine la proportion et, sur cette base, calcule la vitesse moyenne dans la section mouillée.

Il a été montré que la distribution de vitesses à la surface libre du liquide est représentative de la distribution verticale de vitesses dans la section mouillée. Dès lors la vitesse moyenne au sein de la section mouillée peut être déduite de la vitesse moyenne à la surface du liquide. Cependant, la zone impactée peut ne pas être de taille suffisante que pour être représentative de toute la distribution de vitesses à la surface libre du liquide. Ainsi, selon la taille de la zone impactée, la vitesse moyenne au sein du conduit pourra être directement déduite de la vitesse moyenne mesurée en surface ou indirectement via des corrections ou extrapolations.

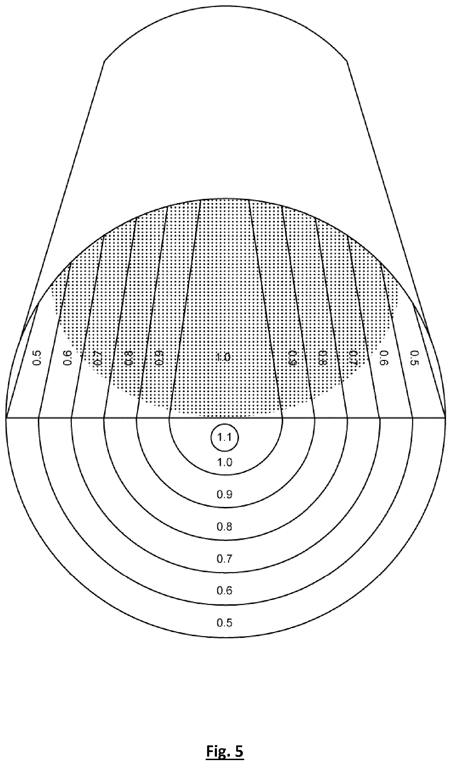

Lorsque L1 égal L2, comme expliqué ci-dessus, la vitesse moyenne du fluide sur la zone impactée, c.à.d. la vitesse à la moyenne µ de la courbe gaussienne est égale à la vitesse moyenne au sein de la section mouillée. On notera cependant que, dans certains cas, lorsque l'écoulement n'est pas turbulent tel que schématisé à la figure 5, il peut y avoir une zone de vitesse plus élevée (1.1 dans l'exemple illustré) sous la surface où la ligne de vitesse n'émerge pas en surface. Eventuellement, et, dans ce cas particulier, une légère correction de l'ordre de 1 à 2% peut être apportée à la vitesse de surface mesurée pour prendre en compte ce phénomène.

Lorsque L2 est inférieur à L1 mais compris entre 3/5 ou, de préférence, 2/3 et 3/3 de L1, c.à.d. 3/5 ou 2/3 ≤ L2/L1 < 1, les zones de vitesses plus lentes près des parois du conduit peuvent ne pas avoir été impactées et dès lors une correction peut s'avérer nécessaire. Cette correction est fonction de la déviation standard de la gaussienne et d'autant plus importante que le ratio L2/L1, et, dès lors la déviation standard, est plus faible. En pratique et, à titre indicatif, la correction à apporter à la vitesse moyenne mesurée est inférieure à 10 % et, plus précisément inférieure à 6 %. Encore plus précisément, elle est comprise entre 2 et 6 %, voire entre 2 et 4 %.

Dans certains cas, seule une portion de la surface est illuminée. C'est le cas, par exemple, pour les conduites circulaires, rectangulaires, ovoïdes ou autre où une partie des mesures sont perdues lorsque le remplissage se trouve, par exemple, entre 50 et 100 % comme montré à la figure 4. C'est le cas également si la distance entre la sonde de mesure et la surface du liquide diminue. Vu la géométrie de l'installation, seule une partie de la surface sera illuminée. Dans ces cas de figure, les données de déviation standard enregistrées préalablement pour différents µ lors des mesures pour des remplissages inférieurs sont utilisées comme projection (extrapolation) pour des remplissages plus élevés. On peut dès lors calculer la vitesse moyenne sur base de la distribution de vitesses mesurées et des données extrapolées complétant les vitesses manquantes dans le spectre. La correction apportée est donc fonction des déviations standard enregistrées préalablement pour des remplissages inférieurs plutôt que de la déviation standard issue de la courbe gaussienne des mesures en cours. Pratiquement, et, à titre indicatif, la correction est inférieure à 10 % et, plus généralement, inférieure à 8 %. Plus précisément, elle peut être comprise entre 3 et 8 %, voire entre 4 et 6 %. La correction est également d'autant plus importante que le ratio L2/L1 est plus faible. On notera que dans des cas extrêmes où presque toute la conduite est remplie, la correction peut être positive, c.à.d. que la vitesse corrigée est supérieure à la vitesse moyenne mesurée.

Pour finir, on précisera que dans l'étape 6, le calcul du pourcentage illuminé pourrait déjà être entrepris avant l'une des étapes 3-5.

Aussi, la méthode a été plus particulièrement décrite pour un système radar à micro-ondes mais s'applique à tout système de mesures générant un spectre de mesures discrètes.

La présente méthode a été décrite avec une étape 3 de sommation des différentes séquences et ensuite une étape de fitting sur la séquence résultante. Alternativement, l'étape 3 peut être omise et une étape d'adaptation d'une courbe gaussienne pourrait être effectuée sur chaque séquence, une moyenne des paramètres µ et σ étant ensuite calculée et servant de base au calcul de la vitesse moyenne de la section mouillée.

### Avantages de l'invention

La méthode selon l'invention s'affranchit de modélisations complexes ou de calibrations fastidieuses. Elle se base sur sa banque de données acquises au cours des mesures précédentes où le niveau était plus faible et où la largeur de la surface illuminée était égale à une valeur se situant entre 2/3 et la totalité 1/1 de la largeur de la surface libre. Dans ces conditions, la déviation standard représente l'étendue totale de la distribution des vitesses à la surface, qui pour un profil de vitesses totalement développé est très similaire à la distribution des vitesses dans la section verticale. Ces valeurs enregistrées qui constituent la banque de données représentent les conditions hydrauliques d'écoulements réels dans la conduite, c.à.d. sur le site de mesure, et seront utilisées pour calculer avec beaucoup plus de facilité et de précision la vitesse moyenne à partir de la mesure de la vitesse de surface lorsque le niveau sera plus élevé et que la largeur de la partie illuminée deviendra plus petite. Comme le processeur détecte les conditions dans lesquelles les données peuvent être enregistrées, on peut parler de « self learning ».

La méthode selon l'invention permet en outre d'optimiser l'analyse des données pour les conditions d'écoulement lent et d'atteindre des seuils de détection de vitesses faibles avec une meilleure précision, ainsi qu'une adaptation automatique des valeurs limites des paramètres de qualité par réponse à des questions simples décrivant le site de mesure et les conditions hydrauliques.

## Revendications

1. Méthode de calcul de la vitesse moyenne d'un fluide circulant dans un canal ouvert ou un conduit (1) partiellement rempli, ledit fluide ayant une surface libre de largeur L1 s'étendant entre les parois du canal ou du conduit,
ladite méthode comprenant les étapes suivantes :
- mesures locales de vitesse à la surface du fluide sur une zone de largeur L2, l'ensemble des mesures locales générant un signal sous forme d'un spectre de données discrètes exprimées dans un domaine temporel ;
- conversion du spectre de données discrètes exprimées dans le domaine temporel en un spectre de données exprimées dans un domaine fréquentiel via une transformée de Fourier ;
**caractérisée en ce que** ladite méthode comporte en outre les étapes suivantes :
- adaptation d'une courbe gaussienne sur le spectre de données discrètes exprimées dans le domaine fréquentiel et calcul des paramètres de la courbe gaussienne, à savoir la moyenne µ et la déviation standard σ de la courbe gaussienne ; la fréquence à la moyenne µ permettant de calculer la vitesse moyenne de surface sur la zone de largeur L2 et la déviation standard σ permettant de calculer la distribution de vitesses sur cette même zone de largeur L2 ;
- calcul du rapport L2/L1 entre la largeur L2 de la zone impactée lors des mesures et la largeur L1 de la surface libre du fluide, ladite largeur L1 étant calculée sur base d'une mesure du niveau du fluide dans le canal ou le conduit (1);
- détermination de la vitesse moyenne du fluide au sein du canal ouvert ou du conduit partiellement rempli sur base des paramètres de la courbe gaussienne et en fonction du rapport L2/L1 :
- lorsque L1 égal L2, la vitesse moyenne du fluide au sein du canal ouvert ou du conduit partiellement rempli est égale à la vitesse moyenne de surface du fluide sur la zone de largeur L2 ;
- lorsque le rapport L2/L1 est supérieur ou égal à 3/5 et, de préférence à 2/3, et inférieur à 1, la vitesse moyenne du fluide au sein du canal ouvert ou du conduit partiellement rempli est égale à la vitesse moyenne de surface du fluide sur la zone de largeur L2 multipliée par un facteur de correction qui est fonction de la déviation standard σ de la courbe gaussienne ;
- lorsque le rapport L2/L1 est inférieur à 3/5 et, de préférence à 2/3, la vitesse moyenne du fluide au sein du canal ouvert ou du conduit partiellement rempli est calculée sur base de la distribution de vitesses mesurées sur la zone de la largeur L2 extrapolées pour les vitesses manquantes sur base d'enregistrements préalables de la distribution de vitesses lorsque ledit rapport était supérieur ou égal à 3/5 et, de préférence à 2/3.

2. Méthode de calcul selon la revendication 1, dans laquelle plusieurs séquences de mesures locales de vitesse sont effectuées, lesdites séquences étant sommées après la transformée de Fourier résultant en une seule séquence sur laquelle la courbe gaussienne est adaptée.

3. Méthode de calcul selon la revendication 1 ou 2, dans laquelle l'étape d'adaptation d'une courbe gaussienne s'effectue sur un groupe de données discrètes le plus énergétique dans une gamme de vitesses prédéterminée.

4. Méthode de calcul selon la revendication 3, dans laquelle ledit groupe de données discrètes le plus énergétique est sélectionné comme suit : le pic le plus énergétique dans la gamme de vitesses prédéterminée est recherché, une fraction donnée de l'énergie du pic est calculée, de préférence ladite fraction est comprise entre 1/3 et 1/2, les groupes de mesures contigus dont l'énergie dépasse cette valeur calculée sont recherchés, les surfaces que représente chaque groupe sont calculées, le groupe ayant la surface la plus importante est retenu et une fonction gaussienne représentant une surface identique est calculée et superposée audit groupe sélectionné.

5. Méthode de calcul selon la revendication 1, dans laquelle le facteur de correction est supérieur à 0.9 et, plus précisément, compris entre 0.94 et 0.98.

6. Méthode de calcul selon l'une quelconque des revendications précédentes, comprenant une étape préalable de validation des mesures en fonction de paramètres prédéfinis avant l'étape de détermination de la vitesse moyenne du fluide au sein du canal ouvert ou du conduit partiellement rempli.

7. Méthode de calcul selon la revendication 6, dans laquelle les paramètres prédéfinis sont une valeur en dB du gain d'un amplificateur automatique, le nombre de mesures se trouvant sous l'enveloppe de la courbe gaussienne et/ou l'amplitude maximum de la courbe gaussienne par rapport à l'amplitude de toutes les mesures incluant le bruit de fond.

8. Méthode de calcul selon la revendication 7, dans laquelle lorsque la valeur en dB du gain est supérieure à une valeur donnée, il y a une étape de focalisation sur les plus faibles vitesses du spectre et ensuite à nouveau une étape d'adaptation d'une courbe gaussienne sur le spectre de données discrètes retenus après focalisation sur les plus faibles vitesses et une étape de calcul des paramètres de la courbe gaussienne.

9. Méthode de calcul selon la revendication 8, dans laquelle la valeur donnée est de 80 dB pour une plage de mesure comprise entre - 0.6m/s et + 0.6m/s et de 84 dB pour une plage de mesure comprise entre - 0.3m/s et + 0.3m/s.

10. Dispositif pour calculer la vitesse moyenne d'un fluide circulant dans un canal ouvert ou un conduit (1) partiellement rempli, ledit fluide ayant une surface libre de largeur L1 s'étendant entre les parois du canal ou du conduit (1), ledit dispositif comprenant :
- un capteur (2) pour effectuer des mesures de vitesse en surface du fluide sur une zone de largeur L2 inférieure ou égale à la largeur L1; ledit capteur (2) fournissant un signal sous forme d'un spectre de données discrètes exprimées dans un domaine temporel ;
- un capteur de niveau du fluide dans le canal ou le conduit (1) afin de calculer la largeur L1;
- un processeur et des moyens de stockage,
**caractérisés en ce que** les moyens de stockage comprennent un programme d'ordinateur comprenant un code logiciel adapté pour mettre en oeuvre la méthode selon l'une quelconque des revendications 1 à 9.

11. Dispositif selon la revendication 10, comprenant une interface utilisateur qui permet de modifier sur site des conditions de validation des mesures effectuées par le capteur (2).

12. Programme d'ordinateur comprenant un code logiciel, **caractérisé en ce que** ledit code logiciel est adapté pour mettre en oeuvre la méthode selon l'une quelconque des revendications 1 à 9.

13. Moyen d'enregistrement des données lisibles par ordinateur comprenant le programme selon la revendication 12.

## Patentansprüche

1. Berechnungsverfahren der durchschnittlichen Geschwindigkeit eines Fluids, welches in einem offenen Kanal oder in einer teilweise gefüllten Leitungsröhre (1) zirkuliert, wobei das Fluid eine freie Oberfläche der Breite L1 hat, die sich zwischen den Wänden des Kanals oder der Leitungsröhre erstreckt,
wobei das Verfahren die folgenden Schritte umfasst:
- örtliche Geschwindigkeitsmessungen auf der Oberfläche des Fluids in einer Zone mit der Breite L2, wobei die Gesamtheit der örtlichen Messungen ein Signal in Form eines Spektrums diskreter Daten, ausgedrückt in einem Zeitbereich, generiert,
- Umwandeln des Spektrums diskreter Daten, ausgedrückt im Zeitbereich, in ein Spektrum von Daten, ausgedrückt in einem Frequenzbereich, über eine Fourier-Transformation,
**dadurch gekennzeichnet, dass** das Verfahren ferner die folgenden Schritte umfasst:
- Anpassen einer Gaußschen Kurve an das Spektrum diskreter Daten, ausgedrückt im Frequenzbereich, und Berechnen der Parameter der Gaußschen Kurve, nämlich des Mittels µ und der Standardabweichung σ der Gaußschen Kurve; wobei die Frequenz mit dem Mittel µ erlaubt, die Durchschnittsgeschwindigkeit auf der Oberfläche in einer Zone mit der Breite L2 zu berechnen, und die Standardabweichung σ erlaubt, die Geschwindigkeitsverteilung in dieser gleichen Zone mit der Breite L2 zu berechnen,
- Berechnen des Verhältnisses L2/L1 zwischen der Breite L2 der von den Messungen betroffenen Zone und der Breite L1 der freien Oberfläche des Fluids, wobei die Breite L1 auf der Basis einer Fluidniveaumessung in dem Kanal oder in der Leitungsröhre (1) berechnet wird,
- Bestimmen der durchschnittlichen Geschwindigkeit des Fluids innerhalb des offenen Kanals oder der teilweise gefüllten Leitungsröhre auf der Basis der Parameter der Gaußschen Kurve und in Abhängigkeit des Verhältnisses L2/L1:
- wenn L1 gleich L2, ist die durchschnittliche Geschwindigkeit des Fluids innerhalb des offenen Kanals oder der teilweise gefüllten Leitungsröhre gleich der durchschnittlichen Oberflächengeschwindigkeit des Fluids in der Zone der Breite L2,
- wenn das Verhältnis L2/L1 größer als oder gleich 3/5 und vorzugsweise 2/3 und kleiner als 1 ist, ist die durchschnittliche Geschwindigkeit des Fluids innerhalb des offenen Kanals oder der teilweise gefüllten Leitungsröhre gleich der durchschnittlichen Oberflächengeschwindigkeit des Fluids in der Zone der Breite L2, multipliziert mit einem Korrekturfaktor, der von der Standardabweichung σ der Gaußschen Kurve abhängt,
- wenn das Verhältnis L2/L1 kleiner als 3/5 und vorzugsweise 2/3 ist, wird die durchschnittliche Geschwindigkeit des Fluids innerhalb des offenen Kanals oder der teilweise gefüllten Leitungsröhre auf der Basis der Verteilung der Geschwindigkeiten berechnet, die in der Zone der Breite L2 gemessen wurden, extrapoliert für die fehlenden Geschwindigkeiten auf der Basis vorheriger Aufzeichnungen der Geschwindigkeitsverteilung, wenn das Verhältnis größer als oder gleich 3/5 und vorzugsweise 2/3 war.

2. Berechnungsverfahren nach Anspruch 1, wobei mehrere Sequenzen örtlicher Geschwindigkeitsmessungen durchgeführt werden, wobei die Sequenzen nach der Fourier-Transformation summiert werden, resultierend in einer einzigen Sequenz, auf welche die Gaußsche Kurve angepasst wird.

3. Berechnungsverfahren nach Anspruch 1 oder 2, wobei der Schritt der Anpassung einer Gaußschen Kurve auf eine stärkste Gruppe diskreter Daten in einem vorbestimmten Geschwindigkeitsbereich erfolgt.

4. Berechnungsverfahren nach Anspruch 3, wobei die stärkste Gruppe diskreter Daten wie folgt ausgewählt wird: in dem vorbestimmten Geschwindigkeitsbereich wird der stärkste Peak ermittelt, es wird ein bestimmter Bruchteil der Energie des Peaks berechnet, wobei der Bruchteil vorzugsweise zwischen 1/3 und 1/2 inklusive beträgt, es werden die angrenzenden Gruppen von Messungen ermittelt, deren Energie diesen berechneten Wert überschreitet, die Oberflächen, die jede Gruppe repräsentiert, werden berechnet, die Gruppe mit der größten Oberfläche wird ermittelt und eine Gaußsche Funktion, welche eine identische Oberfläche repräsentiert, wird berechnet und mit der ausgewählten Gruppe übereinandergelegt.

5. Berechnungsverfahren nach Anspruch 1, wobei der Korrekturfaktor größer als 0,9 ist und genauer zwischen 0,94 und 0,98 inklusive beträgt.

6. Berechnungsverfahren nach einem der vorangehenden Ansprüche, umfassend einen vorherigen Schritt der Validierung der Messungen in Abhängigkeit von vorbestimmten Parametern vor dem Schritt der Bestimmung der durchschnittlichen Geschwindigkeit innerhalb des offenen Kanals oder der teilweise gefüllten Leitungsröhre.

7. Berechnungsverfahren nach Anspruch 6, wobei die vorbestimmten Parameter ein Wert in dB der Verstärkung eines automatischen Verstärkers sind, wobei die Anzahl von Daten, die sich im Rahmen der Gaußschen Kurve und/oder der maximalen Amplitude der Gaußschen Kurve in Bezug auf die Amplitude aller Messungen befindet, das Grundrauschen einschließt.

8. Berechnungsverfahren nach Anspruch 7, wobei, wenn der Wert in dB der Verstärkung größer als ein bestimmter Wert ist, ein Schritt der Fokussierung auf die geringsten Geschwindigkeiten des Spektrums und danach erneut ein Anpassungsschritt einer Gaußschen Kurve an das Spektrum diskreter Daten, die nach der Fokussierung auf die geringsten Geschwindigkeiten ermittelt wurden, und ein Berechnungsschritt der Parameter der Gaußschen Kurve erfolgen.

9. Berechnungsverfahren nach Anspruch 8, wobei der gegebene Wert 80 dB für einen Messbereich zwischen -0,6 m/s und +0,6 m/s inklusive und 84 dB für einen Messbereich zwischen -0,3 m/s und +0,3 m/s inklusive beträgt.

10. Vorrichtung zur Berechnung der durchschnittlichen Geschwindigkeit eines Fluids, das in einem offenen Kanal oder in einer teilweise gefüllten Leitungsröhre (1) zirkuliert, wobei das Fluid eine freie Oberfläche mit der Breite L1 hat, die sich zwischen den Wänden des Kanals oder der Leitungsröhre (1) erstreckt, wobei die Vorrichtung umfasst:
- einen Sensor (2) zur Durchführung der Geschwindigkeitsmessungen auf der Oberfläche des Fluids in einer Zone mit der Breite L2, die kleiner als oder gleich der Breite L1 ist, wobei der Sensor (2) ein Signal in Form eines Spektrums diskreter Daten, ausgedrückt in einem Zeitbereich, bereitstellt,
- einen Fluidstandssensor in dem Kanal oder der Leitungsröhre (1), um die Breite L1 zu berechnen,
- einen Prozessor und Speichermittel, wobei die Speichermittel ein Rechnerprogramm umfassen, das einen Softwarecode umfasst, der für die Durchführung des Verfahrens nach einem der Ansprüche 1 bis 9 geeignet ist.

11. Vorrichtung nach Anspruch 10, umfassend eine Benutzerschnittstelle, die erlaubt, vor Ort Validierungsbedingungen der von dem Sensor (2) durchgeführten Messungen zu verändern.

12. Rechnerprogramm, umfassend einen Softwarecode, **dadurch gekennzeichnet, dass** der Softwarecode für die Durchführung des Verfahrens nach einem der Ansprüche 1 bis 9 geeignet ist.

13. Speichermittel rechnerlesbarer Daten, umfassend das Programm nach Anspruch 12.

## Claims

1. A method for calculating the mean velocity of a fluid flowing in an open channel or a partially filled duct (1), said fluid having a free surface of width L1 extending between the walls of the channel or duct,
said method comprising the following steps:
- local velocity measurements at the surface of the fluid over a zone of width L2, the set of local measurements generating a signal in the form of a spectrum of discrete data expressed in a temporal domain;
- conversion of the spectrum of discrete data expressed in the temporal domain into a spectrum of data expressed in a frequency domain via a Fourier transform;
**characterized in that** said method further comprises the following steps:
- fitting of a Gaussian curve to the spectrum of discrete data expressed in the frequency domain and calculation of the parameters of the Gaussian curve, namely the mean µ and the standard deviation σ of the Gaussian curve; the frequency of the mean µ making it possible to calculate the mean surface velocity over the zone of width L2 and the standard deviation σ making it possible to calculate the velocity distribution over this same zone of width L2;
- calculation of the ratio L2/L1 between the width L2 of the zone impacted during the measurements and the width L1 of the free surface of the fluid, said width L1 being calculated based on a measurement of the level of fluid in the channel or duct (1);
- determination of the mean velocity of the fluid within the open channel or the partially filled duct on the basis of the parameters of the Gaussian curve and as a function of the ratio L2/L1:
- when L1 is equal to L2, the mean velocity of the fluid within the open channel or partially filled duct is equal to the mean surface velocity of the fluid over the zone of width L2;
- when the ratio L2/L1 is greater than or equal to 3/5 and, preferably greater than or equal to 2/3, and less than 1, the mean velocity of the fluid within the open channel or partially filled duct is equal to the mean surface velocity of the fluid over the zone of width L2 multiplied by a correction factor that depends on the standard deviation σ of the Gaussian curve;
- when the ratio L2/L1 is less than 3/5, and preferably than 2/3, the mean velocity of the fluid within the open channel or partially filled duct is calculated based on the distribution of velocities measured over the zone of width L2 extrapolated for the missing velocities based on prior recordings of the velocity distribution when said ratio was greater than or equal to 3/5, and preferably greater than or equal to 2/3.

2. The calculation method according to claim 1, wherein several sequences of local velocity measurements are done, said sequences being summed after the Fourier transform, resulting in a single sequence to which the Gaussian curve is fitted.

3. The calculation method according to claim 1 or 2, wherein the step for fitting a Gaussian curve is done on a group of discrete data that is the most energetic in a predetermined velocity range.

4. The calculation method according to claim 3, wherein said most energetic group of discrete data is selected as follows: the most energetic peak in the predetermined velocity range is sought, a given fraction of the energy of the peak is calculated, preferably said fraction is comprised between 1/3 and 1/2, the contiguous groups of measurements the energy of which exceeds that calculated value are sought, the surfaces represented by each group are calculated, the group having the largest surface is selected, and a Gaussian function representing an identical surface is calculated and superimposed on said selected group.

5. The calculation method according to claim 1, wherein the correction factor is greater than 0.9, and more specifically comprised between 0.94 and 0.98.

6. The calculation method according to any one of the preceding claims, comprising a prior step for validating measurements as a function of predefined parameters before the step for determining the mean velocity of the fluid within the open channel or partially filled duct.

7. The calculation method according to claim 6, wherein the predefined parameters are a value in dB of the gain of an automatic amplifier, the number of measurements located below the envelope of the Gaussian curve and/or the maximum amplitude of the Gaussian curve relative to the amplitude of all of the measurements including the background noise.

8. The calculation method according to claim 7, wherein, when the value in dB of the gain is above a given value, there is a step for focusing on the lowest velocities of the spectrum and then again a step for fitting a Gaussian curve to the spectrum of discrete data selected after focusing on the lowest velocities and a step for calculating the parameters of the Gaussian curve.

9. The calculation method according to claim 8, wherein the given value is 80 dB for a measurement range comprised between - 0.6 m/s and + 0.6 m/s and is 84 dB for a measurement range comprised between - 0.3 m/s and + 0.3 m/s.

10. A device for calculating the mean velocity of a fluid flowing in an open channel or a partially filled duct (1), said fluid having a free surface of width L1 extending between the walls of the channel or duct (1), said device comprising:
- a sensor (2) for performing velocity measurements at the surface of the fluid over a zone of width L2 smaller than or equal to the width L1; said sensor (2) providing a signal in the form of a spectrum of discrete data expressed in a temporal domain;
- a sensor for the level of the fluid in the channel or the duct (1) in order to calculate the width L1;
- a processor and storage means, **characterized in that** the storage means comprise a computer program comprising a software code suitable for implementing the method according to any one of claims 1 to 9.

11. The device according to claim 10, comprising a user interface that allows on-site modification of the conditions for validating measurements done by the sensor (2).

12. A computer program comprising a software code, **characterized in that** said software code is suitable for implementing the method according to any one of claims 1 to 9.

13. A means for recording data readable by a computer comprising the program according to claim 12.
